# EUROPÄISCHE PATENTSCHRIFT

(11) **EP 3 836 242 B1**
(45) Veröffentlichungstag und Bekanntmachung des Hinweises auf die Patenterteilung: **09.08.2023**
(21) Anmeldenummer: 19215281.7
(22) Anmeldetag: 11.12.2019
(51) Int. Cl.: H01M 10/6556, H01M 50/20, H01M 50/26

(54) **BATTERIEWANNE**
BATTERY TUB
BAC À BATTERIE

(43) Veröffentlichungstag der Anmeldung: 16.06.2021
(73) Patentinhaber: GF Casting Solutions AG, 8201 Schaffhausen (CH)
(72) Erfinder: MAHNIG, Dominik, 8200 Schaffhausen (CH); KUPFERSCHMID, Roger, 8261 Hemishofen (CH); PHILIPP, Stephan, 78262 Gailingen (DE); JUST, Michael, 8213 Neunkirch (CH); ATASOY, Hasan, 36284 Hohenroda (DE)
(74) Vertreter: Fenner, Seraina

(56) Entgegenhaltungen:
- WO-A1-2019/169080
- CN-A- 110 238 368

## Beschreibung

Die Erfindung betrifft eine Batteriewanne für mindestens ein Batteriemodul für Kraftfahrzeuge, vorzugsweise für elektrisch angetriebene Fahrzeuge, wobei das Batteriemodul mehrere Batteriezellenmodule aufweist, beinhaltend ein Frontmodul, ein Heckmodul und mindestens ein Mittelmodul, wobei die Module jeweils einen Bodenabschnitt und mindestens einen Wandabschnitt aufweisen, wobei am oder im Bodenabschnitt Kanäle für das Kühlmedium angeordnet sind.

Kraftfahrzeuge, die ausschließlich oder zumindest zusätzlich mit einem Elektroantrieb ausgestattet sind, müssen mit entsprechenden grossen Batterien ausgestattet sein, in welchen die Energie für den Elektroantrieb speicherbar ist. Die Batterien selbst sind dabei in einer Batteriewanne untergebracht, sodass diese zum einen gegen äußere Witterungseinflüsse geschützt sind und zum anderen aber auch ein Austreten von in den Batterien enthaltenen Stoffen an die Umwelt vermieden wird.

Die Grösse einer Batteriewanne richtet sich dabei nach der Anzahl der unterzubringenden Batteriezellen sowie nach dem im Fahrzeug zur Verfügung stehenden Einbauraum.

Aus dem Stand der Technik sind Batteriewannen bekannt, die aus Blechen und Profilen hergestellt sind. Eine Batteriewanne zeichnet sich durch ein wannenförmiges Gehäuse aus, in welchem eine Mehrzahl von Batteriezellen angeordnet wird. Damit eine entsprechende Steifigkeit der Batteriewanne gewährleistet ist, ist außen meist ein umlaufendes Profil, welches zugleich auch als umlaufende Wand der Wanne fungieren kann, angeordnet. Die Anforderungen hinsichtlich Dichtigkeit sowie der Produktionstoleranzen sind hoch.

Zudem ist bekannt, dass beim Betrieb der Batteriezellen unter hohen Temperaturen eine beschleunigte Alterung der Batteriezellen und somit eine verkürzte Lebenszeit eintritt. Um diesem nachteiligen Effekt zu begegnen, ist bekannt eine aktive Kühlung in Form eines durchströmten Kühlkanals an der Wanne vorzusehen.

Die DE 10 2017 005 329 A1 offenbart ein Verfahren zur Herstellung einer Batteriewanne aus Metallblechen welche individuell auf die Grösse der erforderlichen Batterie anpassbar ist.

Nachteilig hierbei ist, dass keine aktive Kühlung an der Wanne vorliegt.

Die DE 10 2015 217 810 A1 offenbart ein Gehäuse für eine Batterie, wobei ein offener Kanal im Gussteil vorliegt der mittels einer zusätzlichen Platte abgedeckt ist. Nachteilig hierbei ist, dass die Batteriewanne nicht individuell vergrössert bzw. der Grösse der Batterie angepasst werden kann, da der Kanalverlauf in sich geschlossen verläuft und nicht erweiterbar ist.

WO 2019/169080 offenbart eine mehrteilige Batteriewanne aus extrudierten Aluminiumteilen.

Es ist Aufgabe der Erfindung eine Batteriewanne vorzuschlagen, welche eine Kühlung der Batterie vorsieht und dass die Wanne auf die unterschiedlichen Batteriegrössen anpassbar ist bzw. ohne zusätzliche Investitionskosten grössere und kleinere Batteriewannen herstellbar sind.

Diese Aufgabe wird erfindungsgemäss dadurch gelöst, dass die Module als Gussteile ausgebildet sind und mittels Fügen miteinander zu einer geschlossenen, druck- und mediumsdichten Batteriewanne verbunden sind.

Die erfindungsgemässe Batteriewanne für mindestens ein Batteriemodul für ein Kraftfahrzeug, vorzugsweise für ein elektrisch angetriebenes Fahrzeug, wobei das Batteriemodul mehrerer Batteriezellen aufweist, beinhaltet ein Frontmodul, ein Heckmodul und mindestens ein Mittelmodul. Die Module weisen jeweils einen Bodenabschnitt und mindestens einen Wandabschnitt auf.

Das Front- wie auch das Heckmodul weisen vorzugsweise eine Wandung auf, die sich um den Bodenabschnitt erstreckt bis auf die Stirnseite, die als Verbindungsbereich ausgebildet ist. In einer alternativen Ausführungsform der Batteriewanne kann das Frontmodul dem Heckmodul oder umgekehrt entsprechen. Das Mittelmodul weist an den beiden sich gegenüberliegenden Aussenseiten jeweils einen Wandabschnitt auf und ist an den beiden sich gegenüberliegenden Stirnseiten mit einem Verbindungsbereich versehen, der es ermöglicht die Module miteinander zu verbinden.

Im oder am Bodenabschnitt sind jeweils Kanäle für das Kühlmittel angeordnet, welches die erfindungsgemässe Batteriewanne bzw. die Module zur Kühlung der Batterie durchströmt.

Die Module sind als Gussteil ausgebildet und mittels Fügen miteinander zu einer Batteriewanne verbunden, wobei die Batteriewanne mediums- und druckdicht ist. Die erfindungsgemässe Batteriewanne stellt eine geschlossene Wanne dar, die aus mehreren Modulen gebildet ist und dadurch die Grösse der Wanne entsprechend auf die Grösse der Batterie anpassbar ist, indem beispielsweise die Batteriewanne durch weitere Mittelmodule ergänzt werden kann, da diese aufgrund des einheitlichen Verbindungsbereichs an den Modulen, zueinander kompatibel sind.

Durch das Zusammenfügen der einzelnen Module miteinander werden die Kanäle der einzelnen Module mediums- und druckdicht miteinander verbunden. Auch die Batteriewanne bzw. die Module sind in den Verbindungsbereichen mediums- und druckdicht miteinander verbunden, so dass Flüssigkeit weder in die Batteriewanne eintreten noch austreten kann.

Vorzugsweise sind die Module jeweils einteilig bzw. einstückig ausgebildet, das heisst, das Frontmodul, das Heckmodul wie auch das Mittelmodul sind jeweils als einteiliges Gussteil mit einem Bodenabschnitt und mindestens einem Wandabschnitt ausgebildet, wobei im oder am Bodenabschnitt Kanäle für das Kühlmedium angeordnet sind.

Als vorteilhaft hat sich gezeigt, wenn die Module als Druckgussteile hergestellt sind. Dieses Herstellverfahren bringt eine hohe Teilegenauigkeit mit sich um zu gewährleisten, dass die Module an den Verbindungsbereichen kompatibel sind.

Gemäss einer bevorzugten Ausführungsform sind die Kanäle für das Kühlmedium an der Unterseite des Bodenabschnitts angeordnet. Die Kanäle sind jeweils im oder am Modul integral angeordnet bzw. in das einteilige Gussteil miteingebracht.

Es ist zu bevorzugen, dass die Kanäle einen geschlossenen Querschnitt aufweisen. Die Kanäle werden vorzugsweise durch Gussmaterial gebildet bzw. der Hohlraum durch den das Kühlmedium strömt wird direkt vom Gussmaterial umgeben.

Es ist vorteilhaft, wenn mindestens ein Modul der miteinander verbundenen Module an mindestens einer Stirnseite einen Verbindungsbereich aufweist, über den die Module mitanderen verbindbar sind. Der Verbindungsbereich ist somit eine kompatible Schnittstelle der Module zueinander.

Es ist vorteilhaft, wenn die Verbindungsbereiche eine Abstufung bzw. einen Versatz bzw. einen längs entlang des Verbindungsbereichs verlaufenden Absatz aufweisen und sich die miteinander verbundenen Module im Verbindungsbereich überlappen.

Als bevorzugte Ausgestaltung hat sich gezeigt, wenn die miteinander verbundenen Module im überlappenden Verbindungsbereich mittels Schweissen, Nieten, Verschrauben und/oder Kleben gefügt sind. Diese Fügearten gewähren die geforderte Mediums- und Druckdichte. Selbstverständlich sind auch weitere Fügetechniken möglich solange sie die mediums- und druckdichte Verbindung gewährleisten.

Es ist vorteilhaft, dass die Wandabschnitte Verrippungen aufweisen, diese versteifen die Wandung und erhöhen die Festigkeit der Batteriewanne.

Vorzugsweise weist die Batteriewanne Verbindungskanäle auf, wobei die Verbindungskanäle jeweils als separate Teile ausgebildet sind. Die Verbindungskanäle, welche die Kanäle der Module untereinander verbindet sind nicht in den Modulen integriert, sondern als separate Teile ausgebildet und sind an der Batteriewanne angeordnet. Vorzugsweise sind die Verbindungskanäle jeweils endseitig der Kanäle angeordnet um sie untereinander zu verbinden. Die Kanäle können mit Hilfe der Verbindungskanäle seriell oder parallel miteinander verbunden werden.

Vorzugsweise verlaufen die Kanäle für das Kühlmedium parallel und sind mit jeweils eines Verbindungskanals an den beiden Enden der Kanäle untereinander verbunden.

Es hat sich als vorteilhaft erwiesen, wenn die Verbindungskanäle aus Kunststoff oder Metallblechen sind. Diese können dann an den Modulen angefügt werden.

Die Erfindung zeichnet sich zusätzlich dadurch aus, dass die erfindungsgemässen Module aus einer Aluminium- oder Magnesiumlegierung hergestellt sind. Dies gewährleistet ein möglichst geringes Gewicht bei hoher Steifigkeit und Festigkeit wie auch eine gute Wärmeleitfähigkeit um die Batterie effizient zu kühlen.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Batteriewanne,
- Fig. 2: eine dreidimensionale Ansicht einer erfindungsgemässen Batteriewanne von unten, wobei die Kanäle seriell verbunden sind,
- Fig. 3: eine dreidimensionale Ansicht einer erfindungsgemässen Batteriewanne von unten, wobei die Kanäle parallel verbunden sind und
- Fig. 4: Schnittansicht durch den Verbindungsbereich zweier Modulen.

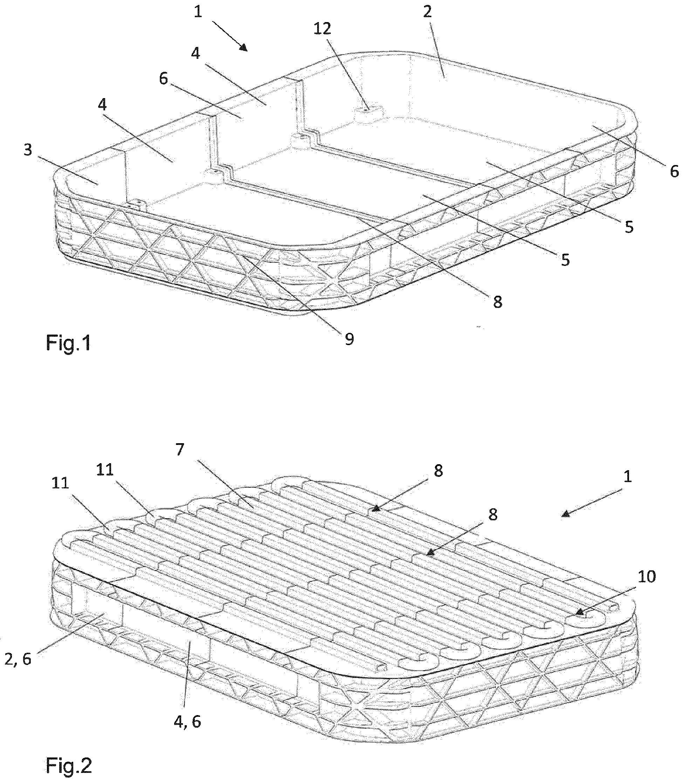

Die in Fig. 1 dargestellte Zeichnung zeigt eine erfindungsgemässe Batteriewanne 1 für Kraftfahrzeuge, vorzugsweise für elektrisch angetriebene Fahrzeuge. Die erfindungsgemässe Batteriewanne 1 dient der Aufnahme eines Batteriemoduls (nicht dargestellt), wobei das Batteriemodul mehrere Batteriezellenmodule aufweist. Die erfindungsgemässe Batteriewanne 1 beinhaltet ein Frontmodul 2, ein Heckmodul 3 und mindestens ein Mittelmodul 4. Die Module 2, 3, 4 weisen jeweils einen Bodenabschnitt 5 und mindestens einen Wandabschnitt 6 auf. Die Module 2, 3, 4 sind jeweils als einteilige Gussteile ausgebildet, vorzugsweise Druckguss. In oder an den Bodenabschnitten 5 der Module 2, 3, 4 sind Kanäle 7 für das Kühlmedium zur Kühlung des Batteriemoduls angeordnet. Zudem weisen die Module 2, 3, 4 vorzugsweise Batteriezellenmodulaufnahmepunkt 12 auf um die Batteriezellen in der Batteriewanne 1 zu fixieren. Die Module 2, 3, 4 sind miteinander an den Verbindungsbereichen 8 zusammengefügt. Durch die zueinander kompatiblen Verbindungsbereiche 8 kann die Batteriewanne 1 entsprechend des einzubauenden Batteriemoduls konfektioniert werden. Das heisst, es können nach Bedarf weitere Mittelmodule 4 miteingebaut werden um die Batteriewanne 1 entsprechend zu vergrössern. Die in den Figuren 1 bis 3 abgebildete Ausführungsform einer Batteriewanne 1 weist zwei Mittelmodule 4 auf, jedoch kann auch nur eines oder noch weitere Mittelmodule 4 eingebaut sein. Die Module 2, 3, 4 weisen Wandabschnitte 6 auf, wobei die Front- und Heckmodule 2, 3 eine bis auf den Verbindungsbereich 8 umlaufenden Wandabschnitt 6 aufweisen und das Mittelmodul 4 zwei sich gegenüberliegende Wandabschnitte 6 aufweist. Gut ersichtlich ist auch die Verrippung 9 der Wandabschnitte 6, welche die Steifigkeit und Festigkeit der Wanne 1 gewährleistet.

In Fig. 2 sind die Kanäle 7 für das Kühlmedium gut ersichtlich, wobei diese an der Unterseite des Bodenabschnitts 5 der Module 2, 3, 4 angeordnet sind. Die Kanäle 7 sind im Modul 2, 3, 4 bzw. dem einteiligen Gussteil integriert. Die Kanäle 7 weisen einen geschlossenen Querschnitt auf somit ist der gebildete Hohlraum 14 vom Gussmaterial umgeben. Die Kanäle 7 verlaufen parallel und sind über die Verbindungsbereiche 8 mediums- und druckdicht mit den Kanälen 7 des angefügten Moduls 2, 3, 4 verbunden.

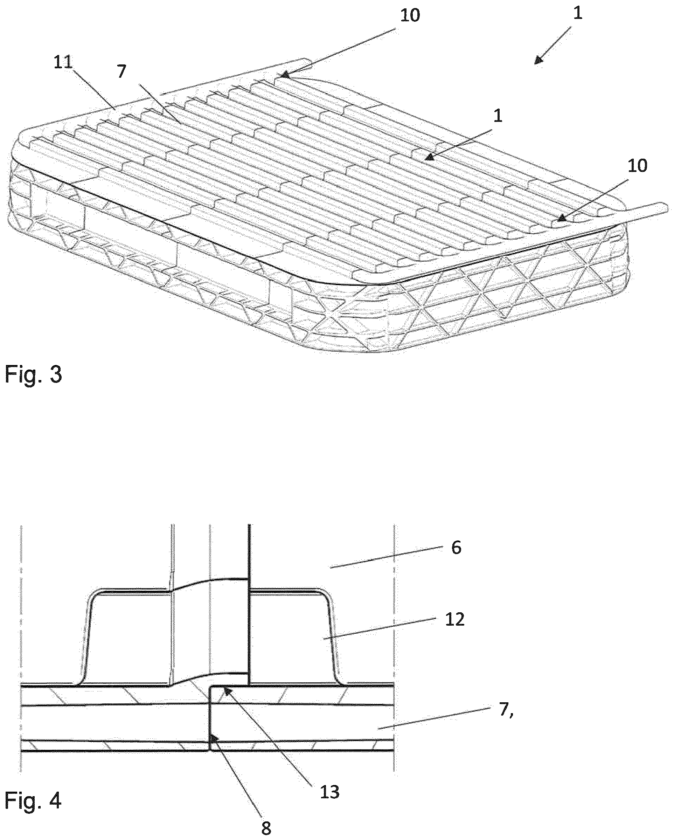

An den Enden 10 der Kanäle 7, die jeweils am Heck- und Frontmodul angeordnet sind, sind Verbindungskanäle 11 angeordnet um die Kanäle 7 parallel oder seriell miteinander zu verbinden. Der Verbindungskanal 11 ist als separates Teil ausgebildet und wird an den zusammengefügten Modulen 2, 3 bzw. dem Front-und Heckmodul 2, 3 bzw. an den Enden 10 der Kanäle 7 angebracht, ebenfalls mediums- und druckdicht. Fig. 2 zeigt eine Verbindung der Kanäle 7 mit Verbindungskanälen 11 die ein serielles anschliessen der Kanäle 7 ermöglicht, wobei in der abgebildeten Ausführungsform die Verbindungskanäle als einzelne Bögen ausgebildet sind und am Modul 2, 3 angeordnet sind. Selbstverständlich können die separaten Bögen auch als ein Teil ausgebildet sein um den Montageaufwand zu verringern, wobei der Strömungskanal der Bögen nicht untereinander verbunden ist um eine serielle Durchströmung zu erzeugen. Fig. 3 zeigt eine Ausführungsform des Verbindungskanals 11 in dem die Kanäle 7 parallel am Verbindungskanal 11 angeschlossen sind.

Fig. 4 zeigt eine Schnittansicht durch einen Verbindungsbereich 8 zwischen zwei Modulen 2, 3, 4. Gut ersichtlich ist, das im einen Modul 2, 3,4 ein Versatz 13 angeordnet ist der sich über die Länge mindestens einer Stirnseite eines Moduls erstreckt. Dadurch wird eine Überlappung der beiden Module im Verbindungsbereich erzielt. Vorzugsweise werden die Module 2, 3, 4 entlang des Verbindungsbereichs 8 noch gefügt beispielsweis durch Schweissen, Nieten, Schrauben, Kleben und/oder ein weiteres Fügemittel welches eine meduims- und druckdichte Verbindung ermöglicht.

### Bezugszeichenliste

- 1: Batteriewanne
- 2: Frontmodul
- 3: Heckmodul
- 4: Mittelmodul
- 5: Bodenabschnitt
- 6: Wandabschnitt
- 7: Kanäle
- 8: Verbindungsbereich
- 9: Verrippung
- 10: Kanalenden
- 11: Verbindungskanal
- 12: Batteriezellenmodulaufnahmepunkt
- 13: Versatz
- 14: Hohlraum Kanäle

## Patentansprüche

1. Batteriewanne (1) für mindestens ein Batteriemodul für Kraftfahrzeuge, vorzugsweise für elektrisch angetriebene Fahrzeuge, wobei das Batteriemodul mehrere Batteriezellenmodule aufweist, beinhaltend ein Frontmodul (2), ein Heckmodul (3) und mindestens ein Mittelmodul (4), wobei die Module (2, 3, 4) jeweils einen Bodenabschnitt (5) und mindestens einen Wandabschnitt (6) aufweisen, wobei am oder im Bodenabschnitt (5) Kanäle (7) für das Kühlmedium angeordnet sind, **dadurch gekennzeichnet, dass** die Module (2, 3, 4) als Gussteile ausgebildet sind und mittels Fügen miteinander zu einer geschlossenen, druck- und mediumsdichten Batteriewanne (1) verbunden sind.

2. Batteriewanne (1) nach Anspruch 1, **dadurch gekennzeichnet, dass** die Module (2, 3, 4) jeweils einteilig bzw. einstückig ausgebildet sind.

3. Batteriewanne (1) nach einem der Ansprüche 1 oder 2, **dadurch gekennzeichnet, dass** die Module (2, 3, 4) als Druckgussteile ausgebildet sind.

4. Batteriewanne (1) nach einem der Ansprüche 1 bis 3, **dadurch gekennzeichnet, dass** die Kanäle (7) für das Kühlmedium an der Unterseite des Bodenabschnitts (5) angeordnet sind.

5. Batteriewanne (1) nach einem der Ansprüche 1 bis 4, **dadurch gekennzeichnet, dass** die Kanäle (7) einen geschossenen Querschnitt aufweisen.

6. Batteriewanne (1) nach einem der Ansprüche 1 bis 5, **dadurch gekennzeichnet, dass** mindestens eines der miteinander verbundenen Module (2, 3, 4) an mindestens einer Stirnseite einen Verbindungsbereich (8) aufweist mittels dem die Module (2, 3, 4) miteinander verbunden sind.

7. Batteriewanne (1) nach Anspruch 6, **dadurch gekennzeichnet, dass** der Verbindungsbereich (8) einen Versatz (13) aufweist und sich die miteinander verbundenen Module (2, 3, 4) im Verbindungsbereich (8) überlappen.

8. Batteriewanne (1) nach einem der Ansprüche 6 oder 7, **dadurch gekennzeichnet, dass** die miteinander verbundenen Module (2, 3, 4) vorzugsweise im überlappenden Verbindungsbereich (8) mittels Schweissen, Nieten Verschrauben und/oder Kleben gefügt sind.

9. Batteriewanne (1) nach einem der Ansprüche 1 bis 8, **dadurch gekennzeichnet, dass** die Wandabschnitte (6) Verrippungen (9) aufweisen.

10. Batteriewanne (1) nach einem der Ansprüche 1 bis 9, **dadurch gekennzeichnet, dass** die Kanäle (7) für das Kühlmedium parallel verlaufen und jeweils an den beiden Enden (10) der Kanäle (7) mittels Verbindungskanälen (11) untereinander verbunden sind.

11. Batteriewanne (1) nach Anspruch 10, **dadurch gekennzeichnet, dass** die Verbindungskanäle (11) die Kanäle (7) parallel oder seriell miteinander verbinden.

12. Batteriewanne (1) nach Anspruch 10 oder 11, **dadurch gekennzeichnet, dass** die Verbindungskanäle (11) jeweils als separate Teile ausgebildet sind.

13. Batteriewanne (1) nach einem der Ansprüche 10 bis 12, **dadurch gekennzeichnet, dass** die Verbindungskanäle (11) aus Kunststoff oder Metallblechen sind.

14. Batteriewanne (1) nach einem der Ansprüche 1 bis 13, **dadurch gekennzeichnet, dass** die Module (2, 3, 4) aus einer Aluminium oder Magnesiumlegierung hergestellt sind.

## Claims

1. Battery tray (1) for at least one battery module for motor vehicles, preferably for electrically driven vehicles, wherein the battery module comprises multiple battery cell modules, including a front module (2), a rear module (3) and at least one central module (4), wherein the modules (2, 3, 4) each comprise a base section (5) and at least one wall section (6), wherein ducts (7) for the cooling medium are arranged on or in the base section (5), **characterized in that** the modules (2, 3, 4) are embodied as cast parts and are connected to one another by means of joining methods to form a closed, pressure-tight and medium-tight battery tray (1) .

2. Battery tray (1) according to Claim 1, **characterized in that** the modules (2, 3, 4) are each embodied as one piece or one part.

3. Battery tray (1) according to either of Claims 1 and 2, **characterized in that** the modules (2, 3, 4) are embodied as pressure cast parts.

4. Battery tray (1) according to one of Claims 1 to 3, **characterized in that** the ducts (7) for the cooling medium are arranged on the lower face of the base section (5) .

5. Battery tray (1) according to one of Claims 1 to 4, **characterized in that** the ducts (7) have a closed cross section.

6. Battery tray (1) according to one of Claims 1 to 5, **characterized in that** at least one of the mutually connected modules (2, 3, 4) comprises on at least one end face a connecting region (8) by means of which the modules (2, 3, 4) are connected to one another.

7. Battery tray (1) according to Claim 6, **characterized in that** the connecting region (8) comprises an offset arrangement (13) and the mutually connected modules (2, 3, 4) overlap in the connecting region (8).

8. Battery tray (1) according to either of Claims 6 and 7, **characterized in that** the mutually connected modules (2, 3, 4) are preferably joined in the overlapping connecting region (8) by means of a welding method, rivets, screws and/or adhesive.

9. Battery tray (1) according to one of Claims 1 to 8, **characterized in that** the wall sections (6) have ribbing (9).

10. Battery tray (1) according to one of Claims 1 to 9, **characterized in that** the ducts (7) for the cooling medium extend in parallel and are connected to one another respectively at the two ends (10) of the ducts (7) by means of connecting ducts (11).

11. Battery tray (1) according to Claim 10, **characterized in that** the connecting ducts (11) connect the ducts (7) to one another in parallel or in series.

12. Battery tray (1) according to Claim 10 or 11, **characterized in that** the connecting ducts (11) are each embodied as separate parts.

13. Battery tray (1) according to one of Claims 10 to 12, **characterized in that** the connecting ducts (11) are embodied from a synthetic material or metal sheets.

14. Battery tray (1) according to one of Claims 1 to 13, **characterized in that** the modules (2, 3, 4) are produced from an aluminium alloy or a magnesium alloy.

## Revendications

1. Bac à batterie (1) pour au moins un module de batterie pour véhicules automobiles, de préférence pour véhicules à entraînement électrique, le module de batterie présentant plusieurs modules de cellule de batterie, contenant un module avant (2), un module arrière (3) et au moins un module central (4), les modules (2, 3, 4) présentant chacun une section de fond (5) et au moins une section de paroi (6), des canaux (7) pour le fluide de refroidissement étant disposés sur ou dans la section de fond (5), **caractérisé en ce que** les modules (2, 3, 4) sont réalisés sous forme de pièces coulées et sont reliés entre eux par assemblage pour former un bac à batterie (1) fermé, étanche à la pression et au fluide.

2. Bac à batterie (1) selon la revendication 1, **caractérisé en ce que** les modules (2, 3, 4) sont réalisés chacun d'une seule pièce ou d'un seul tenant.

3. Bac à batterie (1) selon l'une quelconque des revendications 1 ou 2, **caractérisé en ce que** les modules (2, 3, 4) sont réalisés sous forme de pièces coulées sous pression.

4. Bac à batterie (1) selon l'une quelconque des revendications 1 à 3, **caractérisé en ce que** les canaux (7) pour le fluide de refroidissement sont disposés sur le côté inférieur de la section de fond (5).

5. Bac à batterie (1) selon l'une quelconque des revendications 1 à 4, **caractérisé en ce que** les canaux (7) présentent une section transversale fermée.

6. Bac à batterie (1) selon l'une quelconque des revendications 1 à 5, **caractérisé en ce qu'**au moins un des modules (2, 3, 4) reliés entre eux présente sur au moins un côté frontal une zone de liaison (8) au moyen de laquelle les modules (2, 3, 4) sont reliés entre eux.

7. Bac à batterie (1) selon la revendication 6, **caractérisé en ce que** la zone de liaison (8) présente un décalage (13) et les modules (2, 3, 4) reliés entre eux se chevauchent dans la zone de liaison (8).

8. Bac à batterie (1) selon l'une quelconque des revendications 6 ou 7, **caractérisé en ce que** les modules (2, 3, 4) reliés entre eux sont assemblés, de préférence dans la zone de liaison (8) de chevauchement, par soudage, rivetage, vissage et/ou collage.

9. Bac à batterie (1) selon l'une quelconque des revendications 1 à 8, **caractérisé en ce que** les sections de paroi (6) présentent des nervures (9).

10. Bac à batterie (1) selon l'une quelconque des revendications 1 à 9, **caractérisé en ce que** les canaux (7) pour le fluide de refroidissement s'étendent parallèlement et sont reliés entre eux respectivement aux deux extrémités (10) des canaux (7) au moyen de canaux de liaison (11).

11. Bac à batterie (1) selon la revendication 10, **caractérisé en ce que** les canaux de liaison (11) relient les canaux (7) entre eux en parallèle ou en série.

12. Bac à batterie (1) selon la revendication 10 ou 11, **caractérisé en ce que** les canaux de liaison (11) sont chacun réalisés sous forme de pièces séparées.

13. Bac à batterie (1) selon l'une quelconque des revendications 10 à 12, **caractérisé en ce que** les canaux de liaison (11) sont en matière plastique ou en tôles métalliques.

14. Bac à batterie (1) selon l'une quelconque des revendications 1 à 13, **caractérisé en ce que** les modules (2, 3, 4) sont fabriqués en un alliage d'aluminium ou de magnésium.
